# EUROPEAN PATENT APPLICATION

(11) **EP 2 548 933 A1**
(43) Date of publication of application: **23.01.2013**
(21) Application number: 11755858.5
(22) Date of filing: 10.03.2011
(51) Int. Cl.: C09J 177/10, B32B 15/01, C08G 59/40, C08G 69/32, C09J 7/00, C09J 11/00, C09J 11/04, C09J 163/00, H01L 23/373

(54) **HEAT-RESISTANT ADHESIVE**

(30) Priority: 15.03.2010 JP 2010057505
(71) Applicant: Nippon Kayaku Kabushiki Kaisha, Tokyo 102-8172 (JP)
(72) Inventor: TANAKA, Ryutaro, Tokyo 115-8588 (JP); UCHIDA, Makoto, Tokyo 115-8588 (JP); MOTEKI, Shigeru, Tokyo 115-8588 (JP); AKATSUKA, Yasumasa, Tokyo 115-8588 (JP)
(74) Representative: Gille Hrabal
(86) International application number: PCT/JP2011/001399
(87) International publication number: WO 2011/114665

(57) **Abstract**

Disclosed is a heat-resistant adhesive including: a phenolic hydroxy group-containing aromatic polyamide resin (A) having a structure represented by the following formula (1) 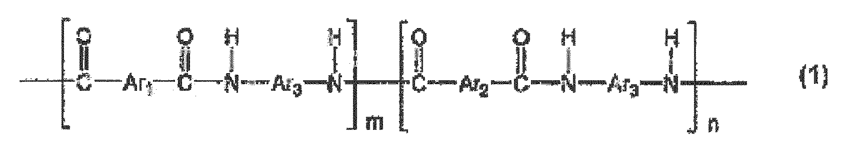 (in the formula, m and n each represent an average and satisfy the relation: 0. 005 ≦ n/(m + n) < 1, and m + n is an integer which is more than 0 but equal to or less than 200, Ar₁ represents a divalent aromatic group, Ar₂ represents a divalent aromatic group having a phenolic hydroxy group, and Ar₃ represents a divalent aromatic group), an epoxy resin (B), a curing catalyst (C), an inorganic filler (D), and an epoxy resin curing agent other than the component (A) as an optional component, in which the amount of the component (D) contained therein relative to 100 parts by mass of the total amount of the components (A) to (C) and the epoxy resin curing agent as the optional component is 30 to 950 parts by mass. A cured layer of the adhesive when an electric circuit or the like and a radiator plate are adhered to each other with the adhesive followed by curing the adhesive not only has high heat resistance and high adhesiveness, but also has high thermal conductivity, and also has excellent long-lasting insulation properties. Further, the cured adhesive is flame retardant, and therefore, the adhesive is very useful as a high-functional semiconductor peripheral material.

## Description

### Technical Field

The present invention relates to a heat conductive adhesive used for heat transfer from a heating element to a radiator member. In particular, it relates to a heat conductive adhesive for forming a heat conductive resin layer which transfers heat from a heating element such as a power semiconductor element to a radiator member, functions also as an insulating layer, and has excellent flame retardancy, a laminate using the adhesive, a radiator plate adhered with the adhesive, and a metal foil adhered with the adhesive.

### Background Art

Since high thermal conductivity, insulating property, and adhesiveness are required for a heat conductive resin layer for transferring heat from a heating part of an electric or an electronic device to a radiator member, a heat conductive resin composition in which an inorganic filler is added to a thermosetting resin is used.

As a heat conductive resin applied between a backside of a lead frame mounted with a power semiconductor and a metal plate as a radiator part in power module, for example, a thermosetting resin sheet or a coating film containing inorganic filler is used.

As a specific example of related art, a heat conductive silicone composition containing specific polyorganosiloxane and a filler (Patent Literature 1) or an adhesive sheet in which an epoxy resin and NBR or reactive acrylic rubber is added with a filler (Patent Literature 2) are suggested. Further, to improve heat resistance or an electric insulating property, a sheet composed of a resin composition containing siloxane modified polyamide imide resin and a filler is suggested (Patent Literature 3). Further, when thermal conductivity is increased by adding a large amount of filler having high heat conductivity to a polyamide resin, melt flowability of the resin is impaired, and thus forming processability or mechanical properties of a formed product, for example, impact strength and the like, are impaired. As such, to improve them, a technique of producing a laminated product by using a resin composition obtained by adding polyolefin having reactivity with a polyamide resin is known (Patent Literature 4).
Although a sheet composed of a resin composition for a flexible wiring board in which a filler is added to a phenolic hydroxy group-containing polyamide resin as used in the present invention is known (Patent Literature 5), it has poor thermal conductivity or the like, and therefore cannot be used for a power module and the like.

### Citation List

### Patent Literature

Patent Literature 1: Japanese Patent Application Laid-Open (JP-A) No. 8-208993
Patent Literature 2: JP-A No. 2000-273409
Patent Literature 3: JP-A No. 2004-217862
Patent Literature 4: JP-A No. 2007-196474
Patent Literature 5: JP-A No. 2007-204598

### Summary of Invention

### Technical Problem

Patent Literature 1 is problematic in that, since it uses a silicone resin with an excellent electric insulating property but with low elasticity, adhesion to a copper foil is low in a room temperature and high temperature region. Patent Literature 2 is problematic in that the electric insulating property or flame retardancy is insufficient at high temperature. Patent Literatures 3 and 4 are problematic in that, although the heat resistance is excellent, solvent resistance, adhesion, and flame retardancy are insufficient, and considering that high thermal conductivity is required according to a progress in micronization process, it cannot be said that it has sufficient thermal conductivity. When content of a filler is increased to improve thermal conductivity, a problem in adhesiveness or the like may occur. For such reasons, it is difficult to satisfy all the requirements described above, and further improvements thereof are in need.

The present invention is devised under the circumstances described above, and the object of the invention is to provide a heat-resistant adhesive having high electric insulating property, high adhesiveness, and high flame retardancy at high temperature, and a laminate using the adhesive. Another object of the invention is to provide a heat resistant adhesive having excellent thermal conductivity, a laminate using the adhesive, a radiator plate adhered with the adhesive, and a metal foil adhered with the adhesive.

### Solution to Problem

The inventors of the invention conducted intensive studies to solve the problems described above, and as a result, found that the improvement for satisfying the above requirements can be achieved by using, as a polyamide resin, a specific polyamide resin in which a certain amount of phenolic hydroxy group is contained in the polyamide skeleton and adding an epoxy resin, a curing catalyst, and boron nitride or alumina nitride as an inorganic filler to the resin.

That is, the invention relates to (1) to (11) as follows.
(1) A heat-resistant adhesive including a phenolic hydroxy group-containing aromatic polyamide resin (A) having a structure represented by the following formula (1) 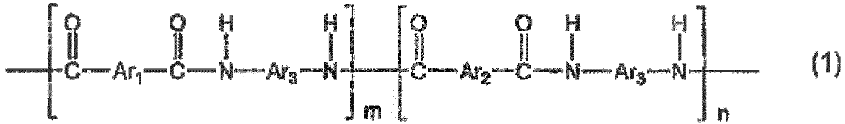 (in the formula, m and n each represent an average and satisfy the relation: 0.005 ≦ n/(m + n) < 1, and m + n is an integer which is more than 0 but equal to or less than 200, Ar₁ represents a divalent aromatic group, Ar₂ represents a divalent aromatic group having a phenolic hydroxy group, and Ar₃ represents a divalent aromatic group), an epoxy resin (B), a curing catalyst (C), aluminum nitride or boron nitride as an inorganic filler (D), and an epoxy resin curing agent other than the above component (A) as an optional component, wherein the amount of the component (D) contained therein per 100 parts by mass of the total amount of the components (A) to (C) and the epoxy resin curing agent as the optional component is from 30 to 950 parts by mass.

(2) The heat-resistant adhesive according to the above (1), including 2 to 50 parts of the epoxy resin (B), 0.1 to 10 parts of the curing catalyst (C), and 0 to 10 parts of an epoxy resin curing agent as an optional component per 100 parts of the polyamide resin (A) of the formula (1).
(3) The heat-resistant adhesive according to any one of the above (1), (2) and the following (11) wherein the inorganic filler (D) is included in an amount of 50 to 200 parts by mass per 100 parts by mass of the total amount of the components (A) to (C) and the epoxy resin curing agent as the optional component.
(4) The heat-resistant adhesive according to any one of the above (1) to (3) and the following (11), which is formed into a film shape.
(5) A laminate in which an electric circuit, a metal foil, or a circuit board is laminated on a radiator plate through a cured layer of the heat-resistant adhesive of any one of the above (1) to (4) and the following (11).
(6) The laminate according to the above (5), wherein the metal foil is copper.
(7) The laminate according to the above (5) or (6), wherein the radiator plate is aluminum, copper, gold, silver, iron, or an alloy thereof.

(8) A radiator plate adhered with the adhesive including a layer of the heat-resistant adhesive of any one of the above (1) to (4) and the following (11).
(9) A metal foil adhered with the adhesive including a layer of the heat-resistant adhesive of any one of the above (1) to (4) and the following (11).
(10) A resin varnish including 30 to 500 parts of a solvent per 100 parts of the heat-resistant adhesive described in the above (1) including the component (A) to component (D) and the epoxy resin curing agent as an optional component.
(11) The heat-resistant adhesive according to the above (1), wherein the value of n/(m + n) is equal to or more than 0.005 but less than 0.25.

### Advantageous Effects of Invention

The heat-resistant adhesive of the invention can be cured at low temperature of 160 to 200°C and the cured product of the composition has heat resistance of 200°C or more and high adhesion strength, can achieve high thermal conductivity of 2 to 10 W/m·K, has excellent long-lasting electric insulating property and excellent flame retardancy, and has flexibility when it is formed into a film shape. Thus, the adhesive can be preferably used as a high-tech semiconductor peripheral material.

### Description of Embodiments

Hereinbelow, embodiments of the invention are explained.

The resin composition of the invention contains a phenolic hydroxy group-containing random copolymerized aromatic polyamide resin (A) having a structure represented by the formula (1) above (hereinbelow, simply referred to as "component (A)"). In the formula (1), Ar₁ represents a divalent aromatic group, Ar₂ represents a divalent aromatic group having a phenolic hydroxy group, and Ar₃ represents a divalent aromatic group. Further, in the specification, the term "divalent aromatic group" means a structure of a compound having at least one or more aromatic groups in the structure in which two hydrogen atoms are removed from the aromatic ring. For example, a diphenyl ether structure containing two benzene rings, that are located across an oxygen, from which a hydrogen atom is removed from each benzene ring is also included in the "divalent aromatic group" described in the specification.

Specific examples of Ar₁ in the formula (1) include a residue of dicarboxylic acids such as phthalic acid, isophthalic acid, terephthalic acid, 4,4'-oxy dibenzoic acid, 4,4'-biphenyl dicarboxylic acid, 3,3'-methylene dibenzoic acid, 4,4'-methylene dibenzoic acid, 4,4'-thio dibenzoic acid, 3,3'-carbonyl dibenzoic acid, 4,4'-carbonyl dibenzoic acid, 4,4'-sulfonyl dibenzoic acid, 1,5-naphthalene dicarboxylic acid, 1,4-naphthalene dicarboxylic acid, 2,6-naphthalene dicarboxylic acid, and 1,2-naphthalene dicarboxylic acid from which two carboxylic groups are removed. Isophthalic acid or terephthalic acid residue is preferable. Isophthalic acid residue is more preferable.
Specific examples of Ar₂ in the formula (1) include a residue of phenolic hydroxy group-containing dicarboxylic acids such as 5-hydroxy isophthalic acid, 4-hydroxy isophthalic acid, 2-hydroxy isophthalic acid, 3-hydroxy isophthalic acid, and 2-hydroxy terephthalic acid from which two carboxylic groups are removed. 5-Hydroxy isophthalic acid residue is preferable.

Specific examples of Ar₃ in the formula (1) include a residue of diamines described below from which two amino groups are removed.
The diamine for Ar₃ include phenylene diamines such as m-phenylene diamine, p-phenylene diamine, and m-tolylene diamine; diamino diphenyl ethers such as 3,3'-dimethyl-4,4'-diamino diphenyl ether, 3,4'-diamino diphenyl ether, and 4,4'-diamino diphenyl ether; diamino diphenyl thioethers such as 3,3'-dimethyl-4,4'-diamino diphenyl thioether, 3,3'-diethoxy-4,4'-diamino diphenyl thioether, 3,3'-diamino diphenyl thioether, 4,4'-diamino diphenyl thioether, and 3,3'-dimethoxy-4,4'-diamino diphenyl thioether; amino phenoxybenzenes such as 1,3-bis(3-amino phenoxy) benzene and 1,3-bis(4-amino phenoxy)benzene; diamino benzophenones such as 4,4'-diamino benzophenone and 3,3'-dimethyl-4,4'-diamino benzophenone; diamino diphenyl sulfones such as 4,4'-diamino diphenyl sulfoxide and 4,4'-diamine diphenyl sulfone; benzidines such as benzidine, 3,3'-dimethyl benzidine, 2,2'-dimethyl benzidine, 3,3'-dimethoxy benzidine, and 2,2'-dimethoxy benzidine; 3,3'-diamine biphenyl; xylylene diamines such as p-xylylene diamine, m- xylylene diamine, and o-xylylene diamine, and diamino diphenyl methanes such as 4,4'-diamino diphenyl methane. Of these, phenylene diamines, diamino diphenyl methanes or diamino diphenyl ethers are preferable. Diamino diphenyl methanes or diamino diphenyl ethers are more preferable. From the viewpoint of solvent solubility or flame retardancy of a polymer obtained, 3,4'-diamino diphenyl ether or 4,4'-diamino diphenyl ether are particularly preferable.

m and n in the formula (1) represents an average repeating number which satisfies the relation of 0.005 ≦ n/(m + n) < 1 and 0 < m + n ≦ 200.
The preferred range of n/(m + n) is 0.005 ≦ n/(m + n) ≦ 0.5. The more preferred range is 0.005 ≦ n/(m + n) < 0.25. The still more preferred range is 0.005 ≦ n/(m + n) ≦ 0.2. Further, in some cases, it may be 0.005 ≦ n/(m+n) < 0.1. In this regard, m + n is preferably from 2 to 200 or so, more preferably, it is from 10 to 100 or so, and most preferably, it is from 20 to 80 or so.
When the value of n/(m + n) in the formula (1) is excessively low, the cross linking reaction between an epoxy group of the epoxy resin (B) (hereinbelow, simply referred to as "component (B)") and a phenolic hydroxy group in the component (A) does not progress to a sufficient level, yielding lowered heat resistance or lowered mechanical strength of a cured product. On the other hand, when the value of m + n is excessively high, the solubility in solvent is extremely lowered, causing a problem in productivity of the component (A) or workability as varnish.
Both ends of the polyamide resin in the formula (1) may be any one of amino group of diamine component, a carboxylic group of dicarboxylic acid component, and a mixture thereof. However, a polyamide resin having amino groups at both ends obtained by reacting a slight excess amount of diamine component is preferable.
The equivalent of phenolic hydroxy group in the polyamide resin of the formula (1) is preferably 8000 to 35000 g/eq or so. More preferably, it is 10000 to 25000 g/eq or so. Most preferably, it is 12000 to 20000 g/eq or so. Further, equivalent of the active hydrogen in the polyamide resin is preferably 3500 to 10000 g/eq or so. More preferably, it is 4000 to 8000 g/eq or so.

Content of the component (A) is preferably 25 to 65% by mass or so, and more preferably 30 to 55% by mass or so per the total mass of the heat-resistant adhesive of the invention.
The component (A) can be synthesized by using the dicarboxylic acids, the phenolic hydroxy group-containing dicarboxylic acids, and diamines described above according to a method described in JP-A No. 2006-124545, for example.
In this regard, according to the invention, the component (A) is used as a curing agent (i.e., cross linking component) of the component (B).

The epoxy resin as the component (B) is not specifically limited if it has two or more epoxy groups in a molecule. Specific examples thereof include a novolac type epoxy resin, a dicyclopentadien-phenol condensation type epoxy resin, a xylylene skeleton-containing phenol novolac type epoxy resin, a biphenyl skeleton-containing novolac type epoxy resin, a bisphenol A type epoxy resin, a bisphenol Type epoxy resin, a tetramethyl biphenol type epoxy resin, and an alicyclic type epoxy resin, but not limited thereto. These epoxy resins may be used in combination of two or more types thereof. The preferred epoxy resin includes a biphenyl skeleton-containing novolac type epoxy resin, for example, NC-3000 (manufactured by Nippon Kayaku Co., Ltd.), and the like.
The use amount of the component (B) in the heat-resistant adhesive of the invention is amount such that the epoxy group in the component (B) is generally 0.5 to 2.0 equivalents, preferably 0.7 to 1.5 equivalents, and more preferably 0.8 to 1.3 equivalents per 1 equivalent of the active hydrogen contained in the component (A) and an epoxy resin curing agent that is used in combination depending on a case (will be described later) . As used herein, the equivalent of the active hydrogen indicates the equivalent of the hydrogen atom which binds to an atom having strong electronegativity that is included in a functional group capable of reacting with an epoxy group. The active hydrogen in the polyamide resin of the formula (1) corresponds to the hydrogen atom of the phenolic hydroxy group and a hydrogen atom of the terminal amino group.
Use amount of the component (B) per 100 parts by mass of the component (A) is generally 2 to 50 parts by mass. It is preferably 5 to 20 parts by mass or so, and more preferably 5 to 15 parts by mass or so.

In the heat-resistant adhesive of the invention, an epoxy resin curing agent other than the component (A) may be used in combination (hereinbelow, referred to as "components OEC").
Specific examples of the curing agent that can be used in combination include diamino diphenyl methane, diethylene triamine, triethylene tetramine, diamino diphenyl sulfone, isophorone diamine, dicyan diamide, a polyamide resin synthesized from a dimer of linolenic acid and ethylene diamine, phthalic anhydride, trimellitic anhydride, pyromellitic anhydride, maleic anhydride, tetrahydro phthalic anhydride, methyl tetrahydro phthalic anhydride, methyl nadic anhydride, hexahydro phthalic anhydride, methyl hexahydro phthalic anhydride, a polyhydric phenol compound such as phenol novolac, triphenyl methane and a modified product thereof, imidazole, BF₃-amine complex, and a guanidine derivative, and the like, but not limited thereto. Depending on the mode of the use, it can be appropriately selected. For example, according to one preferred embodiment of the invention, a polyhydric phenol compound is used. Preferably, phenol novolac obtained by condensation reaction of phenol, formaldehyde, and benzene or biphenyl is used. More preferably, phenol novolac obtained by condensation reaction of phenol, formaldehyde, and biphenyl is used.
When it is used in combination, the ratio of the component (A) per 100 parts by mass of all curing agents is generally 20 parts by mass or more, and more preferably 30 parts by mass or more, although it cannot be definitely said as it also depends on the curing agent used in combination. According to the more preferred embodiment of the invention, it is 60 parts by mass or more. More preferably, it is 80 parts by mass or more, and most preferably 90 parts by mass or more.

Specific examples of the curing catalyst (C) that is contained in the heat-resistant adhesive of the invention (hereinbelow, simply referred to as "component (C)") include imidazoles such as 2-methyl imidazole, 2-ethyl imidazole, and 2-ethyl-4-methyl imidazole, tertiary amines such as 2-(dimethyl amino methyl)phenol, 1,8-diazabicyclo(5,4,0)undecene-7, phosphines such as triphenyl phosphine, and a metal compound such as tin octylate. In general, imidazoles are preferable. The use amount of the component (C) is 0.1 to 20. 0 parts by mass per 100 parts by mass of the component (B).

The inorganic filler (D) that can be contained in the heat-resistant adhesive of the invention (hereinbelow, simply referred to `"component (D)") preferably has thermal conductivity of 3 W/m·K or more, and more preferably 5 W/m·K or more, in which the thermal conductivity is measured by laser flash method. Specific examples of the component (D) include aluminum hydroxide, magnesium hydroxide, calcium carbonate, magnesium carbonate, calcium silicate, calcium oxide, magnesium oxide, alumina, aluminum nitride, aluminum borate whisker, silicon nitride, boron nitride, crystalline silica, non-crystalline silica, and silicon carbide. In order to improve the thermal conductivity of the heat-resistant adhesive, alumina, aluminum nitride, silicon nitride, boron nitride, crystalline silica, non-crystalline silica, and silicon carbide are preferable.
The heat-resistant adhesive of the invention is characterized in that it contains boron nitride or aluminum nitride as the component (D). In the descriptions given below, the component (D) means any one of boron nitride and aluminum nitride, or both of them, unless specifically described otherwise.
Boron nitride is a micro crystal having a scale shape, and those having average crystal diameter of 2 µm or less and those having a major axis of crystal of 10 µm or less are known. The micro crystal often aggregates to form a secondary aggregate particle having relatively large size. According to the invention, the average particle diameter of the secondary aggregate particles is preferably 10 to 30 µm or so, and more preferably 15 to 25 µm or so. Thus, when boron nitride of secondary aggregate particles with large size is used as a material, it is preferable to adjust the size of the secondary aggregate particles of boron nitride that are dispersed in the heat-resistant adhesive of the invention to be within the range described above by pulverization or the like. It is possible to adjust in advance the particle diameter of boron nitride by stirring and mixing or adjust the secondary particles together with mixing at the time of stirring and mixing or kneading with other material.
Aluminum nitride also forms a secondary aggregate particle with size of 1 to 2 µm by aggregation of micro crystals of about 0. 6 µm or so, and therefore it can be used without any processing.
The average particle diameter can be measured by sampling liquid during stirring and mixing. The measurement of the average particle diameter can be carried out by using a grind gauge (particle size gauge) or a laser diffraction particle size distribution measuring apparatus.

The use amount of the component (D) (boron nitride or aluminum nitride) is generally 30 to 950 parts by mass, preferably 40 to 500 parts by mass, and more preferably 50 to 200 parts by mass per 100 parts by mass of the components (A) to (C) and the epoxy resin curing agent as an optional component (i.e., component OEC). Considering a balance among high thermal conductivity, high adhesiveness, and high electric reliability, and the like, it is most preferably 70 to 170 parts by mass or so. When it is used within the range, very high thermal conductivity of 5 to 30 W/m·K and high electric reliability can be achieved as well as high adhesion strength.
In order to increase thermal conductivity of a heat-resistant adhesive, a greater addition amount of the component (D) is better. However, when it is contained in an excess amount, there is a tendency that decrease of adhesiveness is caused and flexibility is lowered when formed into a film shape.

An additive other than the component (A) to the component (D) and the component OEC, for example, a coupling agent, an organic solvent, and an ion scavenger may be added to the heat-resistant adhesive of the invention, if necessary. The coupling agent that can be used is not specifically limited. However, a silane coupling agent is preferable. Specific examples thereof include γ-glycidoxypropyl trimethoxy silane, γ-mercapto propyl trimethoxy silane, γ-aminopropyl triethoxy silane, γ-ureidopropyl triethoxy silane, and N-β-aminoethyl-γ-aminopropyl trimethoxy silane. The use amount of the coupling agent can be determined depending on the use of heat-resistant adhesive, the content of the component (D) and the type of the coupling agent or the like, and it is generally 0 to 5 parts by mass per 100 parts by mass of the heat-resistant adhesive of the invention.

An ion scavenger that can be used for the heat-resistant adhesive of the invention is not specifically limited. Examples thereof include a triazine thiol compound known as a copper inhibitor to prevent ionization and dissolution of copper, a bisphenol type reducing agent such as 2,2'-methylene-bis-(4-methyl-6-tert-butylphenol), and a zirconium type compound, an antimony bismuth type compound, a magnesium aluminum type compound, and hydrotalcite as an inorganic ion adsorbent. By adding the ion scavenger, ionic impurities are adsorbed so that the electric reliability can be improved even when moisture absorption occurs. The use amount of an ion scavenger is generally 0 to 5% by mass in the heat-resistant adhesive of the invention in view of a balance among the effect, the heat resistance, the cost, and the like.

The heat-resistant adhesive of the invention can be also used as varnish dissolved in an organic solvent. The organic solvents that can be used include, for example, lactones such as γ-butyrolactone, amide type solvents such as N-methyl pyrrolidone (NMP), N,N-dimethyl formamide (DMF), N,N-dimethyl acetamide, N,N-dimethyl imidazolidine, sulfones such as tetramethylene sulfone, ether type solvents such as diethylene glycol dimethyl ether, diethylene glycol diethyl ether, propylene glycol, propylene glycol monomethyl ether, propylene glycol monomethyl ether monoacetate, and propylene glycol monobutyl ether, ketone type solvents such as methyl ethyl ketone, methyl isobutyl ketone, cyclopentanone, and cyclohexanone, and aromatic solvents such as toluene and xylene. Of these, a lactones, amide type solvents, and ketone type solvents are preferable, the lactones and the amide type solvents are more preferable. The use amount of the organic solvent is generally 90% by mass or less, preferably 80% by mass or less, and more preferably 70% by mass or less in the total amount of the varnish of the invention. The use amount of the solvent is 30 to 500 parts or so, preferably 70 to 300 parts or so, and more preferably 100 to 200 parts per 100 parts of the heat-resistant adhesive component (i.e., solid matter) of the invention.

The varnish can be prepared by adding the component (D) in small portions to the components other than the component (D) while being mixed by stirring. Considering dispersion of the component (D), it can be prepared by stirring and mixing or kneading by using a kneader, a three roll mill, or a bead mill, or a combination thereof. Further, by the component (D) and a low molecular weight component (for example, the curing catalyst (C), an epoxy resin, an additive for epoxy resin, and other additives) are mixed in advance and added with a high molecular weight component (for example, the component (A)), the time required for mixing can be shortened. Further, when each component is mixed, it is preferable to remove air bubbles that are included within the varnish obtained by vacuum deaeration.

The heat-resistant adhesive of the invention is preferably used by forming into a film shape (i.e., filming) by coating the varnish on a substrate followed by drying the solvent.
The substrate that can be suitably used for filming includes a polyethylene terephthalate film, a polyethylene film, a polypropylene film, a polyester film, a fluorine film, and a copper foil. When a substrate is released after drying, a surface of the substrate may be treated with a releasing agent such as silicone. Specifically, by coating the varnish of the heat-resistant adhesive of the invention on a substrate surface by using a comma coater, a die coater, a Gravure coater and the like, evaporating the solvent in the coating by hot wind or an infrared ray heater to the level at which a curing reaction does not occur, and releasing the coating from a substrate, a heat-resistant adhesive in film shape can be obtained. In this regard, when the substrate used here is used as it is as an adherend of the heat-resistant adhesive, it is no need to release the substrate after solvent evaporation.

Thickness of the heat-resistant adhesive in film shape is generally 2 to 500 µm, preferably 2 to 300 µm, and more preferably 5 to 200 µm. Still more preferably, it is 10 to 200 µm, and most preferably around 20 to 150 µm. When the film thickness is too small, reduction in adhesion strength with an adherend is significant. On the other hand, when the film thickness is too big, too much solvent will remain in the film so that problems such as bubbling and swelling may occur when an environment test is carried out for a product adhered with the adherend.

Preferred embodiments of the heat-resistant adhesive of the invention that is described in the above include the followings.
Meanwhile, in the descriptions given below, parts and % mean parts by mass and % by mass, respectively, unless specifically described otherwise.
(I) A heat-resistant adhesive containing 2 to 50 parts of the epoxy resin (B), 0.1 to 10 parts of the curing catalyst (C), and 0 to 10 parts of an epoxy resin curing agent (component OEC) as an optional per 100 parts of the polyamide resin (A) of the formula (1), in which total amount of them is 37 to 75% per the total amount of the heat-resistant adhesive of the invention and the remaining 25 to 63% is the inorganic filler (D) (aluminum nitride or boron nitride).
(II) The heat-resistant adhesive described in (I) above, in which the above polyamide resin (A) is 25 to 65% per the total amount of the heat-resistant adhesive.
(III) The heat-resistant adhesive described in (II) above, in which content of the above polyamide resin (A) is 30 to 55%.
(IV) The heat-resistant adhesive described in any one of (I) to (III) above, in which content of the epoxy resin (B) is 2 to 20 parts per 100 parts of the above polyamide resin (A).
(V) The heat-resistant adhesive described in (IV) above, in which content of the above epoxy resin (B) is 5 to 15 parts.
(VI) The heat-resistant adhesive described in any one of (I) to (V) above, in which content of the aluminum nitride or boron nitride as the above inorganic filler (D) is 30 to 62% and the total content of the component (A) to the component (C) and the component OEC is 38 to 70% per the total amount of the heat-resistant adhesive.
(VII) The heat-resistant adhesive described in (VI) above, in which content of the aluminum nitride or boron nitride (i.e., component (D)) is 40 to 62% and the total content of the component (A) to the component (C) and the component OEC is 38 to 60%.
(VIII) The heat-resistant adhesive described in any one of (I) to (VII) above, in which it is formed into a film shape. [0031]
(IX) The heat-resistant adhesive described in any one of (I) to (VIII) above, wherein the above polyamide resin (A)is a polyamide resin in which the m and n in the formula (1) satisfy the relation that 0.005 ≦ n/(m + n) ≦ 0.05, and m + n is an integer which is between 2 and 200.
(X) The heat-resistant adhesive described in any one of (I) to (IX) above, in which the polyamide resin (A) of the formula (1) has an amino group at both ends.
(XI) The heat-resistant adhesive described in any one of (I) to (X) above, in which the epoxy resin is a phenol novolac resin containing biphenol skeleton.
(XII) The heat-resistant adhesive described in any one of (I) to (XI) above, in which the curing catalyst (C) is an imidazole type curing catalyst.
(XIII) The heat-resistant adhesive described in any one of (I) to (XII) above, in which average particle diameter of secondary aggregate particles of boron nitride is within the range of 10 to 30 µm.
(XIV) The heat-resistant adhesive described in any one of (I) to (XIII) above, in which average particle diameter of secondary aggregate particles of aluminum nitride is within the range of 1 to 10 µm.
(XV) A resin varnish containing 30 to 500 parts of a solvent per 100 parts of the component (A) to component (D) and the component OEC in which components contained in the heat-resistant adhesive or their content ratio corresponds to the ratio described in any one of (I) to (XIV) above.
(XVI) The resin varnish described in (XV) above in which content of the catalyst is 90 to 200 parts.

Use of the heat-resistant adhesive of the invention is not specifically limited. However, from the viewpoint of the effect thereof, such as heat resistance, high thermal conductivity, adhesion property, flame retardancy, and electric insulating property, it is preferably used for adhering an electric circuit, a metal foil, or a circuit board to a radiator plate. Material of the above metal foil is, although not specifically limited, preferably a copper foil from the viewpoint of versatility. Meanwhile, the term "radiator plate" used herein indicates a plate that is laminated on a surface to which an electronic part is mounted, for the purpose of promoting radiating heat from an electronic part mounted on an electric circuit. In general, a metal plate or the like is used.
The method of adhering them is not specifically limited. For example, the adhesive of the invention is applied as varnish on an electric circuit, a metal foil, or a circuit board (hereinbelow, also referred to as "electric circuit or the like") or applied on a radiator plate, and if necessary, the solvent is removed, then they can be adhered each other by laminating and curing by heat. As a result, adhesion of them can be achieved.
Further, when the adhesive of the invention is processed in a film shape, it is also possible that the film-shape adhesive is laminated on a surface of an electric circuit, a metal foil, or a circuit board on which a radiator plate is to be adhered, or the film-shape adhesive is laminated or so on a surface of a radiator plate on which an electric circuit or the like is to be adhered, then a radiator plate or an electric circuit, a metal foil or a circuit substrate is laminated on the adhesive layer followed by curing by heat.
Further, for the sake of convenience, it is also possible that an adhesive layer of the invention is formed on a surface of a radiator plate on which an electric circuit or the like is to be adhered to give a radiator plate applied with the adhesive and an electric circuit or the like is laminated on the adhesive layer followed by curing under heating. Alternatively, it is also possible that, the adhesive layer of the invention is formed on a surface of an electric circuit or the like on which a radiator plate is to be adhered to give a laminate applied with the adhesive (preferably, a metal foil applied with the adhesive) and a radiator plate is laminated on the adhesive layer followed by curing under heating.
In general, an adhesive layer can be formed on a surface of a radiator plate or an electric circuit or the like by applying the adhesive varnish of the invention followed by drying or laminating the adhesive formed in a film shape.
By adhering an electric circuit or the like with a radiator plate as described above, the laminate of the invention in which the electric circuit or the like is adhered onto a radiator plate through a cured layer of the adhesive of the invention can be obtained.

The laminate in which a radiator plate is laminated on an electric circuit can be produced by circuit processing of a metal foil part of a metal foil which is adhered with a radiator plate as described above (i.e., a radiator plate laminated with a metal foil through a cured layer of the adhesive layer of the invention). Further, electronic parts are mounted on an electric circuit by soldering or the like. The material of the above radiator plate includes a metal such as copper, aluminum, stainless, nickel, iron, gold, silver, molybdenum, and tungsten, a composite of a metal and glass, and metal alloy. Of these, copper, aluminum, gold, silver, or iron having high thermal conductivity, or metal alloy using them are preferable. Thickness of a radiator plate is, although not specifically limited, 0.1 to 5 mm from the viewpoint of processability. By applying the heat-resistant adhesive of the invention on a radiator plate or a metal foil or by laminating the above adhesive sheet thereon, a radiator applied with the adhesive of the invention and a metal foil applied with the adhesive of the invention can be obtained.

### Examples

Hereinbelow, the invention is described in greater detail in view of the examples and comparative examples. However, it is evident that the invention is not limited to the examples. In this regard, the term "parts" used in the examples indicate parts by mass, unless specifically described otherwise.

### Synthetic example 1 (Synthesis of phenolic hydroxy group-containing aromatic polyamide resin (A))

To a flask equipped with a thermometer, a condenser tube, a separation tube, and a stirrer, 3.64 parts (0.02 mol) of 5-hydroxy isophthalic acid, 162.81 parts (0.98 mol) of isophthalic acid, 204.24 parts (1.02 mol) of 3,4'-diamino diphenyl ether, 10. 68 parts of lithium chloride, 1105 parts of N-methyl pyrrolidone, and 236.28 parts of pyridine were added under purging with nitrogen and dissolved therein by stirring. After that, 512.07 parts of triphenyl phosphite were added and the condensation reaction was performed for 4 hours at 95°C to give a reaction mixture containing the component (A). To the reaction mixture, 670 parts of water were added over 3 hours at 90°C under stirring and further stirred at 90°C for 1 hour. Thereafter, the mixture was cooled to 60°C and allowed to stand for 30 minutes. As a result, the upper layer and the bottom layer were separated into an aqueous layer and an oil layer (i.e., resin layer), respectively. The upper layer was removed by decantation. Amount of the removed upper layer was 1200 parts. To the oil layer (i.e., resin layer), 530 parts of N, N-dimethyl formamide was added to give a diluted solution, to which 670 parts of water were added and the mixture was allowed to stand. After separation into layers, the aqueous layer was removed by decantation. This washing process was repeated for four times to wash the component (A). Once the washing is completed, the diluted solution of the component (A) obtained was sprayed onto 8000 parts of water under stirring by using a twin fluid nozzle. Fine powders of the precipitated component (A) having particle diameters of 5 to 50 µm were separated by filtration. The wet cake of the obtained precipitates was dispersed in 2700 parts of methanol and refluxed for 2 hours under stirring. Subsequently, the methanol was separated by filtration and the precipitates that are collected by filtration were washed with 3300 parts of water and dried to obtain 332 parts of the component (A) which has a repeating unit represented by the following formula (2) in the structure.

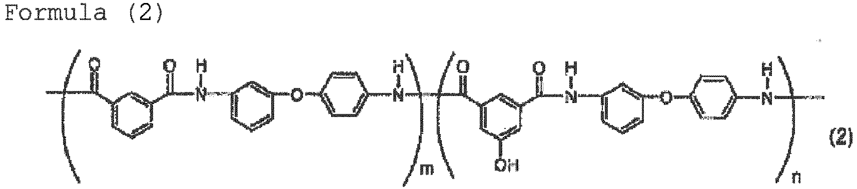

As a result of measuring the atomic amount contained in the component (A) by fluorescence X ray measurement device, it was found that total amount of phosphorus was 150 ppm and total amount of chlorine was 20 ppm. Further, the component (A) obtained has intrinsic viscosity of 0.52 dl/g (dimethyl acetamide solution, 30°C), number average molecular weight was 44000, and weight average molecular weight was 106000 in terms of polystyrene when measured by gel permeation chromatography. When calculated from the molar ratio of each component used for the synthetic reaction, m is approximately 39.2, n is approximately 0.8, phenolic hydroxy equivalent is 16735 g/eq., and the active hydrogen equivalent is 5578 g/eq. in the formula (2).

### Example 1

To 100 parts of the component (A) obtained from the Synthetic example 1, 10 parts of NC-3000 (manufactured by Nippon Kayaku Co., Ltd., hydroxy equivalents 275 g/eq.) as the component (B), 2.5 parts of GPH-65 (manufactured by Nippon Kayaku Co., Ltd., hydroxy equivalents 203 g/eq.) as an epoxy resin curing agent other than the component (A), 1 part of 2-phenyl-4,5-dihydroxy methyl imidazole (2PHZ) as the component (C), and 210.8 parts of N-methyl pyrrolidone as a solvent were added and stirred for 2 hours at 30°C to give a mixture solution (solid matter concentration of 35% by weight) . To 50 parts of the mixture solution obtained (solid matter 17. 5 parts), 8.75 parts (50% per resin solid matter) of boron nitride (MIZUSHIMA FERROALLOY CO., LTD., thermal conductivity of a product: 50 W/m·K) were added as the component (D) and kneaded using a three roll mill to give the resin varnish 1 containing the heat-resistant adhesive of the invention.

### Example 2

The resin varnish 2 containing the heat-resistant adhesive of the invention was obtained in the same manner as the Example 1 except that use amount of boron nitride is changed from 8.75 parts to 13.12 parts (75% per resin solid matter).

### Examples 3 and 4

The resin varnish 3 and 4 containing the heat-resistant adhesive of the invention were obtained in the same manner as the Examples 1 and 2 except that boron nitride of the Examples 1 and 2 is replaced with aluminum nitride (manufactured by Tokuyama Corporation).

### Examples 5 to 8

Each of the resin varnish 1 to 4 obtained from the Examples 1 to 4 was coated on a PET film until the film thickness is 25 µm after drying. By drying at 130°C for 20 minutes, the solvent was removed. After that, the heat-resistant adhesive layer of the invention was removed from a PET film to give each of the heat-resistant adhesive films 1 to 4 of the invention.

### Test example 1

### (1) Measurement of insulation resistance (long-lasting electric insulating property: electric reliability)

By using Upilex cell D (trade name, manufactured by UBE INDUSTRIES, Ltd.), which is a polyimide laminate coated with copper, an interdigitated array electrode prescribed by IPC-SM-840 (conductor/interline = 50 µm/50 µm) was prepared to give a circuit for evaluation. To each of the four circuits for evaluation, each of the heat-resistant adhesive films 1 to 4 that are obtained from the Examples 5 to 8 was applied and compressed to bond under heating at 180°C, 1 MPa for 60 minutes. As a result, samples 1 to 4 for testing electric reliability were obtained.
By using an ion migration acceleration tester, insulation resistance of the samples 1 to 4 was continuously measured from the beginning to 1000 hours while applying direct voltage of 50 V between the electrodes under the environment of 100% RH at 121°C. Until 1000 hours, all samples maintained the insulation resistance of 10⁵ ohm or more.

### (2) Flame retardancy test

Each of the heat-resistant adhesive films 1 to 4 obtained from the Examples 5 to 8 was fixed on a mold by using Kapton^{RTM} (superscript RTM indicates registered trademark) tape, and cured for 1 hour at 180°C to give each of the cured films 1 to 4. The cured films were subjected to flame retardancy test (based on Rule 94 of UL (Underwriter Laboratories)), and the flame retardancy was found to be at the level of VTM-0 for all samples.

### (3) Measurement of Thermomechanical Analysis (TMA)

The cured films 1 to 4 obtained from the above were subjected to TMA measurement (TMA7 manufactured by PerkinElmer Japan Co., Ltd. was used). As a result, it was found that the cured film 1 (content of the component (D) is 50% per resin solid matter) has the glass transition temperature (Tg) of 265°C and coefficient of thermal expansion (CTE) of 40 ppm between 80 and 180°C, and the cured film 2 (content of the component (D) is 75% per resin solid matter) has the Tg of 290°C and CTE of 25 ppm between 80 and 180°C. Further, the cured film 3 (content of the component (D) is 50% per resin solid matter) has the Tg of 270°C and CTE of 45 ppm/°C between 80 and 180°C, and the cured film 4 (content of the component (D) is 75% per resin solid matter) has the Tg of 270°C and CTE of 30 ppm/°C between 80 and 180°C.

### Examples 9 to 12

By using a roll coater, each of the resin varnish 1 to 4 obtained from the Examples 1 to 4 was coated on a roughened surface of a rolled copper foil (BHN foil manufactured by JX Nippon Mining & Metals Co., Ltd.) having thickness of 18 µm in the film thickness of 20 µm after drying. The solvent was removed under drying condition including 130°C for 20 minutes to give the rolled copper foils 1 to 4 applied with the heat-resistant adhesive layer of the invention.

### Test example 2

### (1) Peel strength

The rolled copper foil applied with the heat-resistant adhesive layer of the invention, which has been obtained from the Examples 9 to 12, was cut into two pieces of a size of 20 cm x 20 cm. After the two pieces are put together so that the adhesive layers can face each other, they are compressed to bond under heating for 60 minutes under the condition of 1 MPa and 200°C by using a hot plate press machine to give samples 1 to 4 containing the cured product of the heat-resistant adhesive of the invention for adhesion property test. The samples were then measured with a Tensilon tester (manufactured by ToYo Baldwin Technology Company, Inc.) according to JIS C6481, i. e. , a test specimen with width of 1 cm was peeled in direction of 90° ( ±5°) with peeling speed of 3 mm/min, to measure the peel strength between the copper foil and the cured product of heat-resistant adhesive.
As a result, it was found that samples 1 and 2 have peel strength of 10 to 14 N/cm, sample 3 has peel strength of 20 N/cm, and sample 4 has peel strength of 16 N/cm.

### (2) Test for thermal conductivity

Twenty pieces of each of the heat-resistant adhesive films 1 to 4 obtained from the Examples 5 to 8 were stacked on one another, compressed to bond under heating for 60 minutes under the condition of 1 MPa and 200°C by using a hot plate press machine to give samples 1 to 4 for evaluating thermal conductivity. Thermal conductivity of the sample obtained was measured by using a thermal conductivity tester (trade name: UNITHERM MODEL 2022, manufactured by Anter Corporation). As a result, it was found that the sample 1 (a sample prepared by using the film 1 in which content of the component (D) is 50% per resin solid matter) has the thermal conductivity of 3.05 W/m·K and the sample 2 (a sample prepared by using the film 2 in which content of the component (D) is 75% per resin solid matter) has the thermal conductivity of 8.70 W/m·K. Further, the sample 3 (a sample prepared by using the film 3 in which content of the component (D) is 50% per resin solid matter) has the thermal conductivity of 2.2 W/m·K and the sample 4 (a sample prepared by using the film 4 in which content of the component (D) is 75% per resin solid matter) has the thermal conductivity of 7.8 W/m·K.

As described above, it was found that the heat-resistant adhesive of the invention not only has excellent thermal conductivity but also fully satisfies heat resistance, adhesiveness, flame retardancy, and electric insulating property. By using the adhesive of the invention, a laminate with high reliability can be obtained, and therefore it is useful as adhesive for laminating a radiator plate on an electric circuit, a metal foil, or a circuit board.

### Industrial Applicability

The heat-resistant adhesive of the invention can be cured at low temperature of 160 to 200°C and a cured product of the said composition has heat resistance of 200°C or more and is excellent in high thermal conductivity, adhesiveness, flame retardancy, and electric insulating property, and therefore it is preferable as a high-functional semiconductor peripheral material.

## Claims

1. A heat-resistant adhesive comprising a phenolic hydroxy group-containing aromatic polyamide resin (A) having a structure represented by the formula (1) 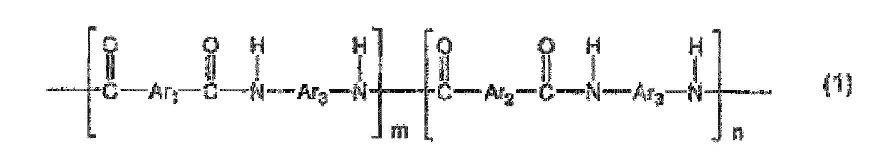 (in the formula, m and n each represent an average and satisfy the relation: 0.005 ≦ n/(m + n) < 1, and m + n is an integer which is more than 0 but equal to or less than 200, Ar₁ represents a divalent aromatic group, Ar₂ represents a divalent aromatic group having a phenolic hydroxy group, and Ar₃ represents a divalent aromatic group), an epoxy resin (B), a curing catalyst (C), aluminum nitride or boron nitride as an inorganic filler (D), and an epoxy resin curing agent other than the component (A) as an optional component, wherein the amount of the component (D) contained therein per 100 parts by mass of the total amount of the above components (A) to (C) and the epoxy resin curing agent as the optional component is from 30 to 950 parts by mass.

2. The heat-resistant adhesive according to Claim 1, comprising 2 to 50 parts of the epoxy resin (B), 0.1 to 10 parts of the curing catalyst (C), and 0 to 10 parts of an epoxy resin curing agent as an optional component per 100 parts of the polyamide resin (A) of the formula (1).

3. The heat-resistant adhesive according to Claim 1, wherein the inorganic filler (D) is comprised in an amount of 50 to 200 parts by mass per 100 parts by mass of the total amount of the above components (A) to (C) and the epoxy resin curing agent as the optional component.

4. The heat-resistant adhesive according to Claim 1, which is formed into a film shape.

5. A laminate in which an electric circuit, a metal foil, or a circuit board is laminated on a radiator plate through a cured layer of the heat-resistant adhesive of Claim 1.

6. The laminate according to Claim 5, wherein the metal foil is copper.

7. The laminate according to Claim 5 or 6, wherein the radiator plate is aluminum, copper, gold, silver, iron, or an alloy thereof.

8. A radiator plate adhered with the adhesive comprising a layer of the heat-resistant adhesive of Claim 1.

9. A metal foil adhered with the adhesive comprising a layer of the heat-resistant adhesive of Claim 1.

10. A resin varnish comprising 30 to 500 parts of a solvent per 100 parts of the heat-resistant adhesive of Claim 1 comprising the component (A) to component (D) and an epoxy resin curing agent other than the component (A) as an optional component.

11. The heat-resistant adhesive according to Claim 1, wherein the value of n/ (m + n) is equal to or more than 0. 005 but less than 0.25.
